# EUROPEAN PATENT SPECIFICATION

(11) **EP 2 478 759 B1**
(45) Date of publication and mention of the grant of the patent: **28.08.2013**
(21) Application number: 11192606.9
(22) Date of filing: 08.12.2011
(51) Int. Cl.: A01G 9/02, A47G 7/04

(54) **Plant pot**
Pflanzentopf
Pot de fleurs

(30) Priority: 25.01.2011 NL 2006061
(43) Date of publication of application: 25.07.2012
(73) Proprietor: Desch Plantpak B.V., 5145 PC Waalwijk (NL)
(72) Inventor: Marteijn, Petrus Charles Joannes Antonius, 5145 PC Waalwijk (NL)
(74) Representative: Algemeen Octrooi- en Merkenbureau

(56) References cited:
- DE-U1- 20 114 322
- DE-U1-202005 012 314
- FR-A1- 2 781 201
- US-A1- 2009 212 187

## Description

The present invention relates to a plant pot comprising a bottom, at least one wall extending from said bottom, and an edge on said wall spaced from the bottom, which edge comprises at least two indentations and which essentially has an edge width at least between said indentations.

Such a plant pot is known, for example from DE 20114322 U1 and/or from EP 1420671 that is derived therefrom, wherein the indentations must be provided on the inner side of the top of the wall, i.e. at the edge, and wherein - more importantly - each indentation must define a seat for a clip of a suspension element.

The known plant pot exhibits a number of drawbacks, however. In the first place, the known plant pot has its indentations on the inner side of the edge. If the plant pot is well-filled, potting compost (or any other substrate that may be used) may find its way into the cavity defined by the indentations. As a consequence, it may be impossible to ensure a proper retainment of the clip in the seat defined by the indentation, possibly resulting in displacement of the clip along the edge of the plant pot, which in turn may cause the plant pot to fall over and its contents to fall out. Nevertheless, a known plant pot of necessity has the indentations on the inner side of the edge. Another drawback is the fact that the clips of the hooks being used are designed and dimensioned to fit in the edge without the indentations or other seat for the clip, so that the indentations that are locally provided prevent the hook clips from properly engaging the edge.

In addition to that, the known plant pots exhibit indentations extending along a great length (the indentations are long, seen in the direction along the edge of the known plant pots), as a result of which the edge of the known plant pots looks objectionably deformed, at least in the layman's eye.

The object of the invention is to obviate or at least alleviate the above, or any other, drawbacks of the known technology, to which end a plant pot according to the present invention is different from the known plant pots in that two adjacent indentations of said at least two indentations define an interspace along the edge for receiving a clip of a suspension element, in which interspace the edge has its edge width and the indentations form barriers against displacement of a clip along the edge. Thus there is surprisingly provided a strongly improved plant pot, which can be stably suspended without any additional risk of the pot becoming detached than in the case of a pot not provided with indentations. Incidentally, according to the present invention the indentations clearly indicate to a user where to place the hook clips. According to the invention, the indentations forming barriers (not being seats themselves, however) may be provided at any position on the circumference of the edge, on the inner side, the upper side or the outer side of the edge relative to the plant pot itself. The dimensions of indentations may remain small in comparison with those of the large seat-forming prior art indentations, and are thus much less conspicuous, if no special attention is paid thereto, whilst nevertheless being good indicators for the placement of hook clips, in those situations where a user looks out for such indicators, even if they are small. All the same, a very reliable retainment of the hook clips is provided, precisely because of its retainment between the barrier-forming indentations. Displacement of hook clips, once placed, can thus be prevented in a very effective manner and, amazingly, even at least as well as is possible with the prior art, which use is made of indentations that form large seats.

The present invention has various preferred embodiments, which are defined in the dependent claims appended hereto.

In one embodiment, the plant pot according to the present invention is further characterised in that the edge comprises a flange portion extending substantially away from the wall, which substantially defines the edge width, and a collar portion substantially oriented along the wall, and in that the at least two indentations are formed in at least one of said flange portion and said collar portion.

In one embodiment, the plant pot according to the present invention is further additionally or alternatively characterised in that the edge comprises at least two sets of adjacent indentations. The plant pot may in that case be characterised in that the edge comprises four sets of adjacent indentations.

In one embodiment comprising a flange portion and a collar portion as the edge and at least two sets of indentations, a plant pot according to the present invention may furthermore be characterised in that at least one of said sets of adjacent indentations is provided in the flange portion and at least one of said sets of adjacent indentations is provided in the collar portion.

In one embodiment, the plant pot according to the present invention is further additionally or alternatively characterised in that the dimensions of the interspace are at least slightly larger than the those of the clip.

In one embodiment, the plant pot according to the present invention is further additionally or alternatively characterised in that the plant pot is produced by means of a deep-drawing process or an injection-moulding process.

In one embodiment, the plant pot according to the present invention is further additionally or alternatively characterised in that the wall is provided with stiffening ribs.

In one embodiment, the plant pot according to the present invention is further characterised in that at least one of the indentations comprises a deformation relative to the edge, being shaped in at least two directions.

The present invention also relates to an assembly of a plant pot according to the invention in combination with a suspension element comprising at least two clips, which clips are designed to engage the edge of the pot in at least two of the interspaces.

The present invention will now be explained in more detail by means of a description of a few mutually different embodiments thereof as shown in the appended drawing, in which like numbers may be used for identical and/or like elements, components and aspects, which embodiments shall by no means be construed as being limitative to the scope of the present invention, which is defined in the (likewise appended) claims. In the drawing:
Figure 1 is a perspective view showing an embodiment of a plant pot according to the present invention;
Figure 2 shows a detail II of figure 1;
Figure 3 is a perspective view showing another embodiment of a plant pot according to the present invention;
Figure 4 shows a detail IV of figure 3;
Figure 5 is a perspective view showing yet another embodiment of a plant pot according to the present invention;
Figure 6 is a side view of an assembly of a plant pot and a clip according to the present invention;
Figure 7 is a perspective, angle view from below of an edge of the plant pot of figure 5;
Figure 8 is a partially cut-away side view of an assembly comparable to the assembly shown in figure 6, in which a different embodiment of the plant pot is shown, however; and
Figure 9 is a perspective view showing a detail of yet another embodiment of a plant pot according to the present invention.

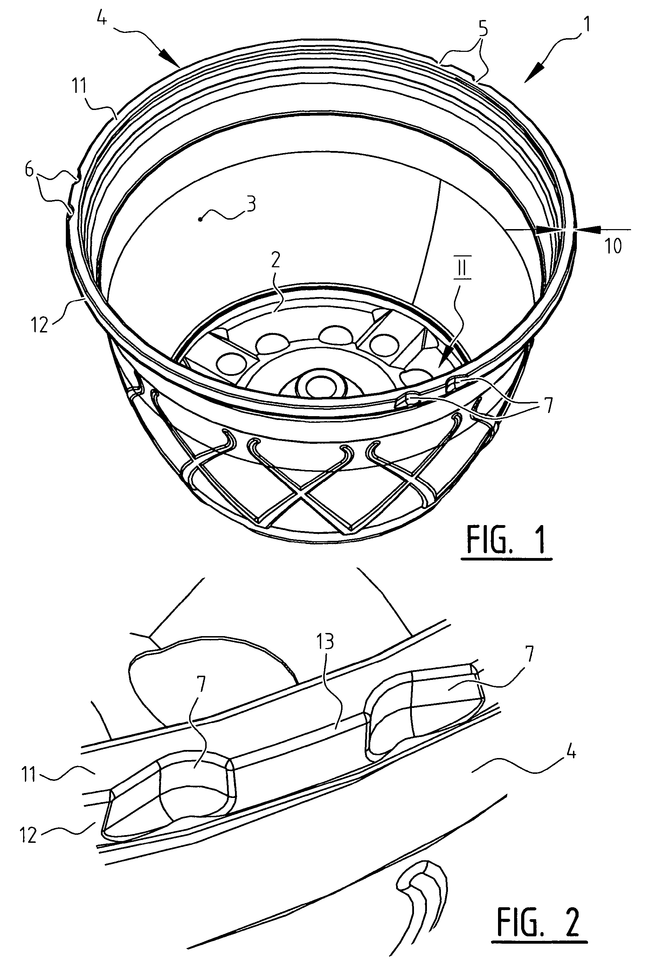

Figure 1 shows in perspective view a plant pot 1 according to the present invention. The plant pot 1 comprises a bottom 2 and a wall 3 extending from said bottom. A variant having a different circumferential shape may comprise more than one wall, for example in the case of a plant pot having a square sectional shape, seen in plan view, which may be considered to comprise four walls.

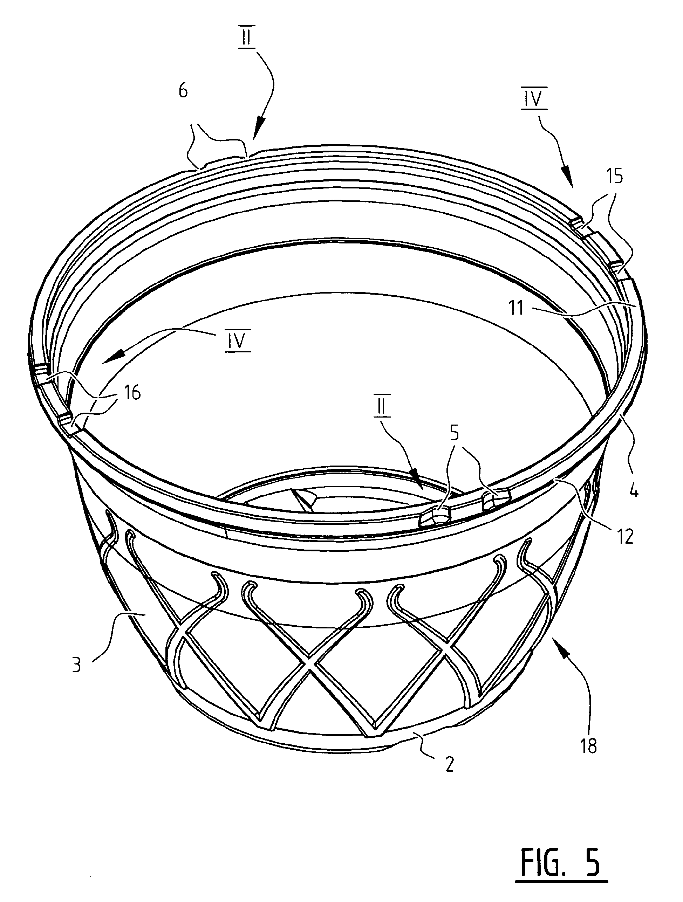

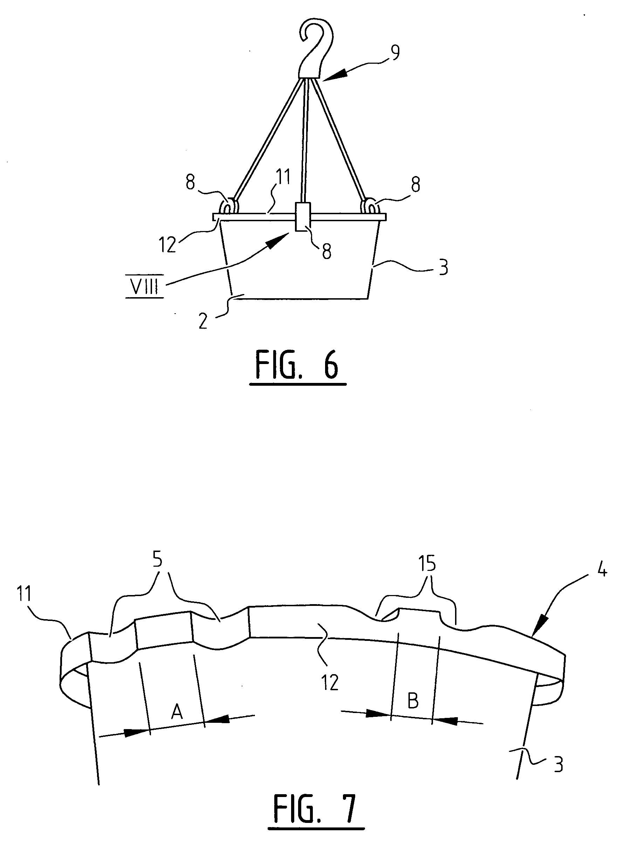

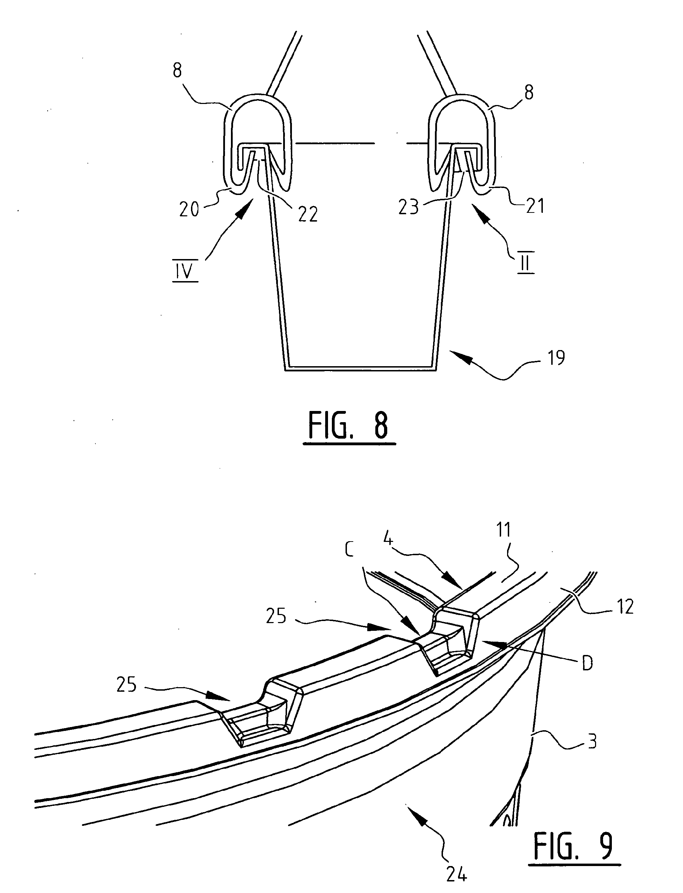

The plant pot 1 further comprises an edge 4 on the wall 3, spaced from the bottom 2, which edge comprises four sets of indentations 5, 6 and 7, and which essentially has an edge width, at least between the indentations, which is indicated by the double arrow 10 in figure 1. In many cases, the dimensions of the clips 8 of a hook 9 as for example shown in figure 6 and figure 8 are adapted to fit said edge width 10. The present invention obviates the need to adapt the dimensions of the clips 8 of hooks 9, this in contrast to the aforementioned prior art. The edge 4 comprises a flange portion 11 extending substantially away from the wall 3, which substantially defines the edge width 10, and a collar portion 12 essentially oriented along the wall. The indentations are each provided both in the flange portion 11 and in the collar portion 12 in the illustrated embodiment. The indentations could also protrude (upward from the flange portion 11 and/or radially outward from the collar portion, so as to still be able at all times to prevent clips from moving past such an indentation), and/or only in one of said flange portion 11 and said collar portion 12 (not extending through the corner 13 between the flange portion 11 and the collar portion 12, unlike the situation in the embodiments shown in the figures). The edge may also comprise two or four or more sets of indentations, preferably four sets of indentations, as shown in figure 5.

In the embodiment shown in figure 1 and figure 2, the indentations of the sets 5, 6 and 7 are mainly provided in the collar portion 12, in the sense that thus an effective inner space enclosed by the wall 4, the flange portion 11 and the collar portion 12, in which a leg of a clip 8 of the hook 9 engages, is reduced in the radial direction of the plant pot. Such a leg of the clip 8 of the hook 9 will not, or at least not easily, be able to move past such an indentation, precisely because of the thus formed constriction of the aforesaid inner space.

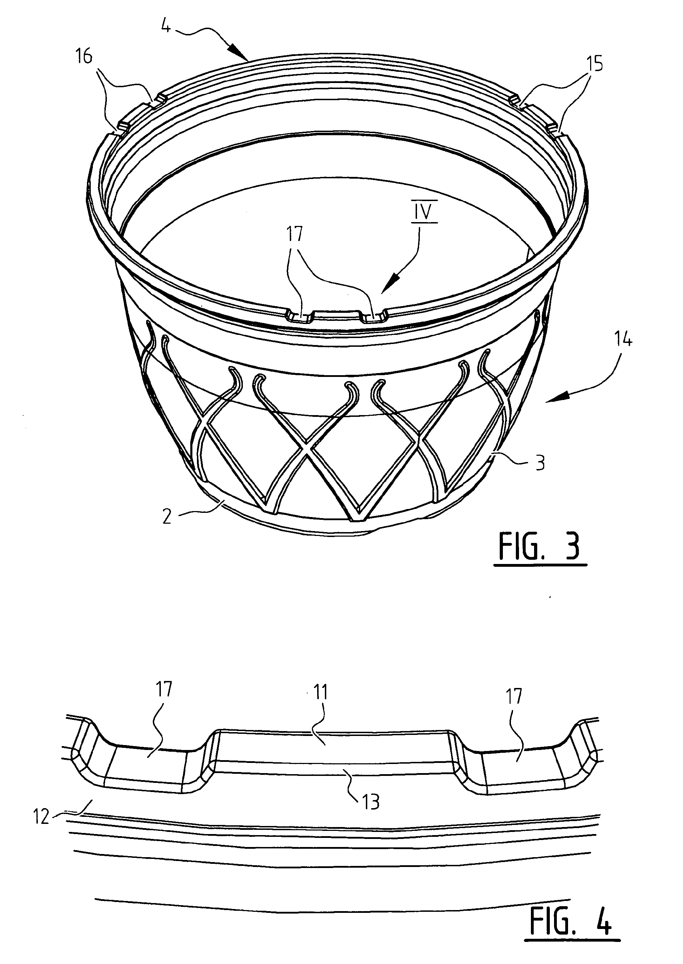

In contrast thereto, the embodiment of a plant pot 14 shown in figure 3 and figure 4 comprises sets 15, 16 and 17 of indentations mainly provided in the flange portion 11. As a result, the aforesaid inner space is reduced in axial direction relative to the plant pot 14. As is also shown in figure 8, legs of the clips 8 of a hook 9 extend to the underlying surface of the flange portion 11. Thus, the indentations form barriers against displacement of said legs of the clips 8 of the hook 9 in this embodiment as well.

The sets 5, 6, 7 and 15, 16, 17 of indentations form such barriers on either side of a location along the edge 4 of the plant pot 1 or 14 where clips are preferably provided. The pairs or sets 5, 6, 7 and 15, 16, 17 of indentations are also easily visible and clearly indicate to the users the presence of such locations where the provision of clips 8 of the hook 9 is desired (if not preferred).

Figure 5 shows a hybrid embodiment of a plant pot 18, whose edge 4 comprises both kinds of indentations, viz. mainly in the collar portion 12 and mainly in the flange portion 11, as indicated at II at IV, respectively, in the detail views of figure 2 and figure 4. The edge 4 comprises two sets of indentations of one type (II) and two sets of indentations of the other type (IV), and thus a total of four sets 5, 6 and 15, 16 of indentations.

Figure 6 shows an assembly of a plant pot according to the invention with a hook 9 provided with clips 8.

Figure 7 is an angle view from below of the edge 4 of the plant pot 18 shown in figure 5. Said figure provides a clearer view of the interspace between the individual indentations of a set 5, 5 in the collar portion 12 as indicated by the double arrow A and also of the interspace between the individual indentations of a set 15, 15 in the flange portion 11 as indicated by the double arrow B. Said interspaces between indentations illustrate the limited freedom of movement of the clips 8 of the hook 9 in a situation in which said clips engage the edge between the indentations of each set.

Figure 8 shows yet another embodiment of a plant pot 19 in assembled condition with a hook 9. The plant pot 19 is different from the above-described variants in that different types of indentations are provided diametrically opposite each other in the edge 4. As has become apparent, the clips 8 need not be adapted at all as compared to clips used with a known plant pot not having any indentations in the edge 4, whilst nevertheless making it possible to realise a secure engagement and suspension of the plant pot 19.

Located on the right-hand side is a set of indentations of the one type II, which form a barrier 23 which projects radially inwards into the inner space between the wall 4, the flange portion 11 and the collar portion 12. On the left, the plant pot 19 comprises the indentations of the other type IV. The clips 8 comprise legs 20 and 21, which extend into the aforesaid inner space, and which are locally enclosed between the various type II, type IV barriers.

Figure 9 shows yet another embodiment of a plant pot 24 according to the invention. The plant pot 24 is different from the variants described in the foregoing in that each indentation 25 is provided in two dimensions, as indicated by the arrows C and D in figure 9. In this embodiment, too, a set of indentations encloses an intended location for a clip 8 (not shown in figure 9) of a hook 9. The indentations 25 of figure 9 are thus combined or hybrid indentations each having a configuration which exhibits features of each of the views of figures 2 and 4, i.e. the indentations 25 each extend downward in the flange portion 11 and inward in the collar portion 12.

## Claims

1. A plant pot, comprising:
- a bottom (2);
- at least one wall (3) extending from said bottom; and
- an edge (4) on said wall spaced from the bottom, which edge comprises at least two indentations (5; 6; 7; 15; 16; 17) and which essentially has an edge width (10) at least between said indentations, **characterised in that**
two adjacent indentations of said at least two indentations define an interspace along the edge for receiving a clip of a suspension element, in which interspace the edge (4) has its edge width (10) and the indentations (5; 6; 7; 15; 16; 17) form barriers against displacement of a clip (8) along the edge.

2. The plant pot according to claim 1, wherein the edge (3) comprises a flange portion (11) extending substantially away from the wall (12), which substantially defines the edge width, and a collar portion (12) essentially oriented along the wall, and wherein the at least two indentations are formed in at least one of said flange portion and said collar portion.

3. The plant pot according to claim 1 or 2, wherein the edge (4) comprises at least two sets of adjacent indentations.

4. The plant pot according to claim 3, wherein the edge (4) comprises four sets of adjacent indentations.

5. The plant pot according to claim 2 and claim 3 or 4, wherein at least one of said sets of adjacent indentations is provided in the flange portion (11) and at least one of said sets of adjacent indentations is provided in the collar portion (12).

6. The plant pot according to at least one of the preceding claims, wherein the dimensions of the interspace are larger than those of the clip (8).

7. The plant pot according to at least one of the preceding claims, wherein the plant pot (1) is produced by means of a deep-drawing process or an injection-moulding process.

8. The plant pot according to at least one of the preceding claims, wherein the wall (2) is provided with stiffening ribs.

9. The plant pot according to at least one of the preceding claims, wherein at least one of the indentations (25) comprises a deformation relative to the edge (4; 24), being shaped in at least two directions (C, D).

10. An assembly of a plant pot according to at least one of the preceding claims and a suspension element (9) comprising at least two clips (8), wherein the clips (8) are designed to engage the edge (4; 24) of the pot (1; 19) in at least two of the interspaces.

## Patentansprüche

1. Blumentopf, mit:
- einem Boden (2);
- wenigstens einer Wand (3), die sich von dem Boden erstreckt, und
- einem vom Boden beabstandeten Rand (4) auf der Wand, der wenigstens zwei Vertiefungen (5; 6; 7; 15; 16; 17) aufweist und der im Wesentlichen wenigstens zwischen den Vertiefungen eine Randbreite (10) hat, **dadurch gekennzeichnet, dass**
zwei benachbarte Vertiefungen der wenigstens zwei Vertiefungen einen Zwischenraum entlang des Randes definieren, um eine Klammer eines Aufhängungselements aufzunehmen, wobei in dem Zwischenraum der Rand (4) seine Randbreite (10) hat und die Vertiefungen (5; 6; 7; 15; 16; 17) Hindernisse gegen das Verrutschen einer Klammer (8) entlang des Randes bilden.

2. Blumentopf nach Anspruch 1, wobei der Rand (3) einen Flanschabschnitt (11), der sich im Wesentlichen von der Wand (12) weg erstreckt und der im Wesentlichen die Randbreite definiert, und einen Kragenabschnitt (12) aufweist, der im Wesentlichen entlang der Wand ausgerichtet ist, und wobei die wenigstens zwei Vertiefungen in dem Flanschabschnitt und/oder dem Kragenabschnitt ausgebildet sind.

3. Blumentopf nach Anspruch 1 oder 2, wobei der Rand (4) wenigstens zwei Sätze benachbarter Vertiefungen aufweist.

4. Blumentopf nach Anspruch 3, wobei der Rand (4) vier Sätze benachbarter Vertiefungen aufweist.

5. Blumentopf nach Anspruch 2 und Anspruch 3 oder 4, wobei wenigstens einer der Sätze benachbarter Vertiefungen in dem Flanschabschnitt (11) vorgesehen ist und wenigstens einer der Sätze benachbarter Vertiefungen in dem Kragenabschnitt (12) vorgesehen ist.

6. Blumentopf nach wenigstens einem der vorhergehenden Ansprüche, wobei die Abmessungen des Zwischenraumes größer als die der Klammer (8) sind.

7. Blumentopf nach wenigstens einem der vorhergehenden Ansprüche, wobei der Blumentopf (1) durch einen Tiefziehprozess oder einen Spritzgussprozess hergestellt ist.

8. Blumentopf nach wenigstens einem der vorhergehenden Ansprüche, wobei die Wand (2) mit Versteifungsrippen versehen ist.

9. Blumentopf nach wenigstens einem der vorhergehenden Ansprüche, wobei wenigstens eine der Vertiefungen (25) eine Verformung relativ zum Rand (4; 24) aufweist, die in wenigstens zwei Richtungen (C, D) geformt ist.

10. Baugruppe aus einem Blumentopf gemäß wenigstens einem der vorhergehenden Ansprüche und einem Aufhängungselement (9) mit wenigstens zwei Klammern (8), wobei die Klammern (8) dazu ausgebildet sind, an dem Rand (4; 24) des Topfes (1; 19) an wenigstens zwei der Zwischenräume anzugreifen.

## Revendications

1. Pot de fleurs, comprenant :
- un fond (2) ;
- au moins une paroi (3) s'étendant depuis ledit fond ; et
- une arête (4) sur ladite paroi espacée du fond, laquelle arête comprend au moins deux entailles (5 ; 6 ; 7 ; 15 ; 16 ; 17) et présente essentiellement une largeur d'arête (10) au moins entre lesdites entailles, **caractérisé en ce que**
deux entailles adjacentes desdites au moins deux entailles définissent un espacement le long de l'arête pour recevoir un clip d'un élément de suspension, dans lequel espacement l'arête (4) présente sa largeur d'arête (10) et les entailles (5 ; 6 ; 7 ; 15 ; 16 ; 17) forment des barrières contre le déplacement d'un clip (8) le long de l'arête.

2. Pot de fleurs selon la revendication 1, dans lequel l'arête (3) comprend une partie de bride (11) s'étendant sensiblement loin de la paroi (12) qui définit sensiblement la largeur d'arête, et une partie de collier (12) sensiblement orientée le long de la paroi, et dans lequel lesdites au moins deux entailles sont formées dans au moins l'une desdites partie de bride et partie de collier.

3. Pot de fleurs selon la revendication 1 ou 2, dans lequel l'arête (4) comprend au moins deux ensembles d'entailles adjacentes.

4. Pot de fleurs selon la revendication 3, dans lequel l'arête (4) comprend quatre ensembles d'entailles adjacentes.

5. Pot de fleurs selon la revendication 2 et la revendication 3 ou 4, dans lequel au moins l'un desdits ensembles d'entailles adjacentes est prévu dans la partie de bride (11) et au moins l'un desdits ensembles d'entailles adjacentes est prévu dans la partie de collier (12).

6. Pot de fleurs selon au moins l'une quelconque des revendications précédentes, dans lequel les dimensions de l'espacement sont plus grandes que celles du clip (8).

7. Pot de fleurs selon au moins l'une quelconque des revendications précédentes, dans lequel le pot de fleurs (1) est produit à l'aide d'un processus d'emboutissage profond ou d'un processus de moulage par injection.

8. Pot de fleurs selon au moins l'une quelconque des revendications précédentes, dans lequel la paroi (2) est dotée de nervures raidisseuses.

9. Pot de fleurs selon au moins l'une quelconque des revendications précédentes, dans lequel au moins l'une des entailles (25) comprend une déformation relative à l'arête (4 ; 24) formée dans au moins deux directions (C, D).

10. Ensemble d'un pot de fleurs selon au moins l'une quelconque des revendications précédentes, et d'un élément de suspension (9) comprenant au moins deux clips (8), dans lequel les clips (8) sont conçus pour engager l'arête (4 ; 24) du pot (1 ; 19) dans au moins deux des espacements.
